# EUROPEAN PATENT SPECIFICATION

(11) **EP 1 227 451 B1**
(45) Date of publication and mention of the grant of the patent: **06.05.2004**
(21) Application number: 00956533.4
(22) Date of filing: 04.09.2000
(51) Int. Cl.: G07G 1/14, G06F 17/60, G07G 5/00

(54) **DEVICE, SYSTEM AND METHOD FOR GENERATING, LOCALLY PRINTING AND REDEEMING PROMOTIONAL COUPONS**
VORRICHTUNG, SYSTEM UND VERFAHREN ZUM ERZEUGEN, ÖRTLICHEN DRUCKEN UND EINLÖSEN VERKAUFSFÖRDENDER GUTSCHEINE
DISPOSITIF, SYSTEME ET PROCEDE DE GENERATION, D'IMPRESSION LOCALE ET DE REMISE DE COUPONS PROMOTIONNELS

(30) Priority: 11.09.1999 ES 9902021
(43) Date of publication of application: 31.07.2002
(73) Proprietor: Distribuidora Internacional de Alimentacion, S.A.,- D.I.A.S.A., Edificio Sollube, 28020 Madrid (ES)
(72) Inventor: COARASA CERDAN, Pilar, Edificio Sollube E-28020 Madrid (ES); OCHOA MULAS, Gema, Edificio Sollube E-28020 Madrid (ES); GARCIA VAZQUEZ, José Luis, Edificio Sollube E-28020 Madrid (ES); MARTINEZ GALLARDO, Luis, Edificio Sollube E-28020 Madrid (ES); VALERIO VINDAS, Jorge Eli, Edificio Sollube E-28020 Madrid (ES)
(74) Representative: Ungria Lopez, Javier
(86) International application number: PCT/ES2000/000337
(87) International publication number: WO 2001/020566

(56) References cited:
- WO-A1-99/12117
- US-A- 5 832 457

## Description

### TECHNICAL FIELD OF THE INVENTION

This invention is set within the field of systems applicable to the generation of promotion coupons associated with purchases made by customers. More specifically, the invention belongs to the sector of promotion coupon systems that generate those coupons at the actual points of sale in which the customers have been identified when presenting their shopping cards.

### BACKGROUND OF THE INVENTION

The distribution of direct gifts or of promotion coupons to purchasers of products or services has for many years formed part of systems for increasing customer loyalty and for promoting products.

In its most traditional form, which are still used today, such systems comprise providing a customer with coupons for each purchase made and based on the total value of the purchase, for example. These coupons come in the form of "value stamps" which can be collected and stuck in a book. Once this book is completed, it grants the right to a gift or a certain discount, or in the form of discount or gift vouchers based on the total value of the purchase. These systems, although they win loyalty among customers to the store where the coupons are distributed with each purchase, nevertheless do not permit an evaluation of the behaviour of customers on the basis of data concerning their purchasing record.

Other traditional systems comprise the massive distribution of discount or gift coupons by means of publishing cut-out coupons in magazines and newspapers, the addition of such coupons to certain products, or the mailing of letters to homes. These systems, although they permit potential customers to be attracted to sales outlets, are indiscriminate and little efficient in the sense that just a small part of the public actually chooses to go to a sales outlet in order to redeem the coupons that they hold. They are also costly in terms of buying the advertising spaces in magazines and newspapers or in terms of the mailing costs.

Other systems are based on the evaluation of files of potential customers created by marketing companies, or of files generated from records of customers who have used shopping cards with personal codes. These systems permit promotion and loyalty campaigns to be directed specifically at people selected on account of belonging to groups of special interest, with the campaigns consisting of either the mailing of promotion coupons to the homes of the customers, which entails considerable costs and suffers from a lack of efficacy that is inherent nowadays to promotions via mail, or of the generation of specific discount coupons in the check-out tills of sales outlets.

In terms of systems for the generation of specific coupons in the check-out tills of sales outlets, a plurality of alternatives have been described.

So, US patent US-A-4723212 describes a system for issuing discount coupons. In this system, a discount coupon is created in response to the purchase of articles different from those that have been bought, for which each article is examined in order to determine whether it is suitable for the issuing of a coupon and, if so, the coupon is printed. Moreover, the system permits the redemption of coupons, for which it checks whether the list of articles bought corresponds to the specified conditions of the coupon and, if they do correspond, then the discount is applied to the resulting value of the purchase of the articles in relation to which the customer has presented the discount coupon. The processes relating to both the issuing and to the redemption of the coupon are performed in the cash register of the sales outlet, for which the system has means that apply an identifying bar code which codes the conditions established in the coupon and which can be read in the check-out tills of the sales outlet, plus a computer where the codes are stored along with the price of each article available in addition to the issue conditions of a discount coupon applicable to certain articles, means for identifying the products suitable for the issue of one or various discount coupons in the list of products bought by a customer, means for printing the coupon when at least one discount coupon is detected, and means which, in a subsequent purchase to the one in which a customer presents a coupon, a check is made of whether that purchase meets the conditions for redemption of the coupon and, if so, then those means apply the discount to the value of that purchase. This system has the drawbacks of not permitting personalisation of coupons in line with the shopping behaviour of specific customers or groups of customers, as well as requiring that each article in a list of purchases of the customer has to be verified individually with the list of articles suitable for the issuing of a discount coupon. This therefore requires at least one large capacity processing computer in these sales outlets.

US patent US-A-4910672 describes another system for the issuing and redeeming discount coupons which, as well as the characteristics of the system described in US patent US-A-4723212, also includes a series of additional functions basically comprising the fact that the issuing of a coupon can also be subject to the purchasing of a range of products by the customer, in which "negative coupons" can be issued when a customer fails to buy a particular article, or "blind coupons" can be created usable only for statistical evaluations and which do not get to be printed or handed over to the customers, and/or instantaneously redeemable coupons can be generated. This system suffers from the same drawbacks as those described in US patent US-A-4723212.

European patent application EP-A-0511463, although it constitutes an advantageous development on the systems described in American patents US-A-4723212 and US-A-4910672, also suffers from the same drawbacks as those of said US patents. So, according to the system described in this document, instead of individual discount coupons being generated, coupons are generated that accumulate all the discounts detected on the basis of purchases made by a customer of products suitable for discount and, when it comes to be redeemed under the pre-established conditions, they lead to an accumulated discount on the subsequent purchase of the customer who presents the coupon.

European patent application EP-A-0512509 describes a later development of the systems described in US patents US-A-4723212 and US-A-4910672, as well as including the functions described in European patent EP-A-0511463. According to the system described in the European patent application EP-A-0512509, computing means are also included that allow the issuing and redemption of a coupon to be subject to the customer belonging to a particular target group and/or being included in a data file containing information about his or her previous purchases and/or his or her person which make that customer into a target customer. Although this system permits the personalisation of promotions, it still has the drawback that, when analysing whether a current purchase by a customer is suitable for the issuing of a coupon, each article in the shopping basket of the customer has to be verified individually against the list of articles suitable for issuing a discount coupon, and this therefore requires at least a large capacity processing computer in the sales outlets. Also, when the system described in patent application EP-A-0512509 is programmed for issuing a discount coupon merely on the basis of customer identification (for example, in cases of promoting a particular product in a target group of people of a certain age), the drawback arises that when it comes to redeeming the coupon, there is no possibility of verifying whether that coupon really is being redeemed by the person to whom it was issued or whether it is being presented by another person. The outcome is that the effect of the promotion on people in the target group could become diminished and the system becomes difficult to verify.

### OBJECT OF THE INVENTION

The purpose of the present invention is to solve the drawbacks of the systems making up the state of the art as described above, by means of a system and a method for the generation, assignment, local printing and redemption of coupons, which permits promotion coupons to be issued for target customers and groups of customers and which permits the need to process data, and thus to have high capacity computing equipment in the sales outlets, to be efficiently reduced.

Another object of the invention is to provide a system and a method for the generation, assignment, local printing and redemption of coupons that is flexible and easily adaptable to the computing equipment already existing in the points of sale.

A subsequent object of the invention is to reduce the computing capacities needed for setting up the conditions for the issuing of coupons and for the redemption of them.

An additional object of the invention is to generate standardised and easily modifiable conditions for the issuing of promotional coupons.

Other objective and advantages of the system of the present invention are revealed from the description of the invention and its embodiments, which will be made below.

### DESCRIPTION OF THE INVENTION

In order to achieve the objectives specified above, the present invention first of all provides a device for the generation, local printing and redemption of promotion coupons, including a terminal provided in at least one point of sale, whose terminal comprises a local data input unit for entering the codes of articles making up the shopping basket of the customer, the codes of customers making a purchase, and the codes of coupons presented for redemption, a printer unit; a register unit registering the codes of the articles received from the local data input unit and the customer code, and which creates a list of purchases in which each entry corresponds to an article bought by a customer whose code has been introduced via the local data input unit; verification means for checking whether at least one criterion selected from among the customer data corresponds to at least one parameter for the issuing of at least one coupon; detecting means for detecting the end of the list of purchases of the customer, means for generation of a coupon, and processing means for the redemption of each coupon handed over by a customer for being redeemed.

In the device according to the present invention, the generation means are connected to an assignment file generated by central data processing means on the basis of a master file of customers containing data on each customer holding a shopping card, and on the basis of a unified file of coupons containing a plurality of standard coupons each one identified by means of a specific standard coupon code, and each one corresponding to specific conditions that have to be met for the redemption of a coupon generated by the generation means. The assignment file contains customer codes, each one of which is associated with a standard coupon code;

When the verification means have checked that a customer code introduced via the local data input unit coincides with a customer code included in the assignment file, the generation means generate a virtual coupon and automatically order the printer unit to print a coupon with a coupon code that includes a security code made up of digits of the customer code and with the standard coupon code assigned to the customer in the assignment file.

Moreover, the processing means only carry out the redemption of a coupon presented by a customer in a subsequent purchase, after checking that the digits of the customer code and the data on the list of said purchase established by the register unit, respectively coincide with the corresponding digits in the security code and with the specific conditions corresponding to the standard coupon code, which appear in the coupon code for the coupon being handed over.

The present invention also refers to a system for the generation, local printing and redemption of promotion coupons including central data processing means; at least one main terminal provided in at least one point for sale that comprises a local data input unit for entering the codes of articles making up the shopping basket of the customer, the codes of customers making a purchase, and the codes of coupons presented for redemption, a printer unit; a register unit which registers the codes of the articles received from the local data input unit and the customer code, and which creates a list of purchases in which each entry corresponds to an article bought by a customer whose code has been introduced via the local data input unit; verification means for checking whether at least one criterion selected from among the customer data corresponds to at least one parameter for the issuing of at least one coupon; detecting means for detecting the end of the list of purchases of the customer, means for generation of a coupon, processing means for the redemption of each coupon handed over by a customer for being redeemed, in which system
the central data processing means generate an assignment file on the basis of a master file of customers containing data on each customer holding a shopping card, and on the basis of a unified file of coupons containing a plurality of standard coupons each one identified by means of a specific standard coupon code, and each one corresponding to specific conditions that have to be met for the redemption of a coupon generated by the generation means. The assignment file contains customer codes, each one of which is associated with a standard coupon code;
the generation means receive the master file of customers with their associate coupon and, when the verification means have checked that a customer code introduced via the local data input unit coincides with a customer code included in the assignment file, they generate a virtual coupon and automatically order the printer unit to print a coupon with a coupon code that comprises a security code made up of digits of the customer code and with the standard coupon code assigned to the customer in the assignment file;
the processing means only carry out the redemption of a coupon presented by a customer in a subsequent purchase, after checking that the digits of the customer code and the data on the list of that purchase established by the registering unit respectively coincide with the corresponding digits in the security code and with the specific conditions corresponding to the standard coupon code, which appear in the coupon code for the coupon being handed over.

In third place, the present invention also provides a procedure for the generation, local printing and redemption of promotional coupons characterised in that it carries out the execution of the system defined above.

In accordance with the present invention, the terminal can be a main terminal that stores the assignment file in its memory or a dependent terminal that receives the assignment file from a remote location, such as for example from the main terminal or from the central processing means via a fixed line or a via a telephone line, or by means of loading the assignment file stored in a diskette. In a preferred embodiment of the invention, at least one main terminal that receives and stores the assignment file is connected to at least one dependent terminal that does not store in its memory the master file of customers with associated coupon or to another terminal of identical characteristics to those of the main terminal, in which case the assignment file is loaded only in the first main terminal which supplies it to the other terminals. In another preferred embodiment of the invention, various main terminals are combined in such a way that all the terminals include all the elements, though the loading of data from the outside is done only via one of the terminals, which in turn loads the other terminals.

Preferably, the generation means generate the coupon code in the form of a bar code. Said bar code is printed on each coupon that is issued, in such a way that the bar code can be read by a scanner in the local data input unit when the coupon is presented for redemption. Apart from the security code and the code for the assigned standard coupon, the coupon code can also contain at least one control digit and/or a code for the device or the point of sale issuing it, and/or an additional code permitting the local data input unit to recognise that the coupon code being captured does not correspond to a product code.

In an embodiment of the invention, the security code that is printed includes digits that are only partially coincident with corresponding digits in the customer identification code, as for example, with at least three, but not all the digits of the customer identification code. Such digits can be successive digits, such as the first or last digits, or randomly distributed digits of the customer code.

In a preferred embodiment of the invention, the generation means comprise a register of issued and printed coupons, this register being generated by an archive unit which, in a preferred embodiment, keeps the register of issued coupons only until the register is transferred to the central data processing means. According to this embodiment, the central data processing means can keep the data active for a coupon originating from the register of issued coupons only until the validity of that coupon expires.

Preferably, the processing means include registering means that generate a file of redeemed coupons. In this embodiment, the register means can keep the file of redeemed coupons only until the file of redeemed coupons is transferred to the central data processing means where the data on each redeemed coupon can be kept active in the file of redeemed coupons only until the validity of each coupon expires.

In a practical design of the invention, the internal code for each standard coupon in the unified file of coupons includes at least six digits made up of a different alphanumeric code for each standard coupon.

The local data input unit in each device can be provided with a keypad and/or a bar code scanner, especially intended for reading bar codes on articles making up the shopping baskets of the customers and the bar codes identifying the coupons presented for redemption, and/or a magnetic strip reader, especially for the reading of customer cards and credit cards, conventional themselves.

In a preferred embodiment of the invention, the unified file of coupons contains a plurality of gift conditions, each established in the form of a standard coupon identified by an alphanumeric code, consisting of a six-digit code, 000001 to 999998, permitting to establish 999,998 different coupons. This unified file is unique for all stores and terminals belonging to a single group of stores, and it is established centrally by the central data processing means. It enables a customer to be able to redeem the coupon that he or she has received in one shop or in any other shop belonging to the same group.

Basically, each standard coupon identified by its code defines the conditions of the purchase and the gift that must be provided when the coupon is redeemed.

From the above description, it is revealed that the system of the present invention permits the issuing and redemption of coupons in local mode, i.e., it does not need any continuous connection to an external base in order to maintain its operation, nor does it require terminals with especially large capacities since the operations that are performed in the terminals are very simple.

### BRIEF DESCRIPTION OF THE DRAWINGS

In order to illustrate some of the characteristics of the invention in further detail and with illustrative but not limiting purposes, it will be described on the basis of certain figures in which
figure 1 is a simplified block diagram illustrating the interconnection of the main elements making up the system of the present invention,
figure 2 is a flow diagram illustrating the functioning of a main terminal,
figure 3 is a flow diagram illustrating the functioning of a secondary terminal,
figure 4 is a schematic flow diagram illustrating the interrelation between a main terminal and a secondary terminal.

Appearing in these figures numerical references appear denoting the following elements:
- 1: central processing means
- 2: main terminal
- 2': secondary terminal
- 3,3': local data input unit
- 4,4': registering unit
- 5,5': verification means
- 6,6': generation means of the promotional coupon
- 7,7': printer unit
- 8: printed promotional coupon
- 9,9': processing means for redemption
- 10,10': registering means generating the file of redeemed coupons
- 11: assignment file
- 12: master file of customers
- 13: unified file of coupons
- 14,14': register of issued and printed coupons
- 15,15': register of redeemed coupons
- 16,16': detecting means for end of the purchase
- 17,17': archive unit that stores data on the list of purchases of each customer and conditions of each coupon issued
- 18,18': data input and output register
- 19: purchase receipt

### DESCRIPTION OF EMBODIMENTS OF THE INVENTION

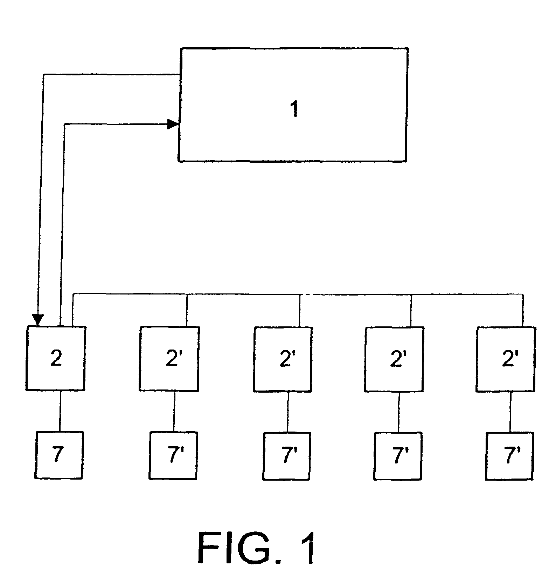

Figure 1 shows schematically the interrelation of the central data processing means 1 with a main terminal 2 which is in turn connected to a plurality of secondary terminals 2'. In the embodiment shown in figure 1, each of the terminals 2,2' is connected to a printer 7,7', though it is also possible to have various terminals 2,2' sharing a single printer. The printers 7,7' can be intended for printing just the coupons handed over to the customers or they can also be used for printing the purchase receipt. The terminals 2,2' can be programmable electronic cash registers, conventional themselves.

The arrows appearing in figure 1 indicate the exchange of data between the central data processing means and the main terminal 2, which is in turn connected to secondary terminals 2' in order to make possible to exchange data with the secondary terminals 2'.

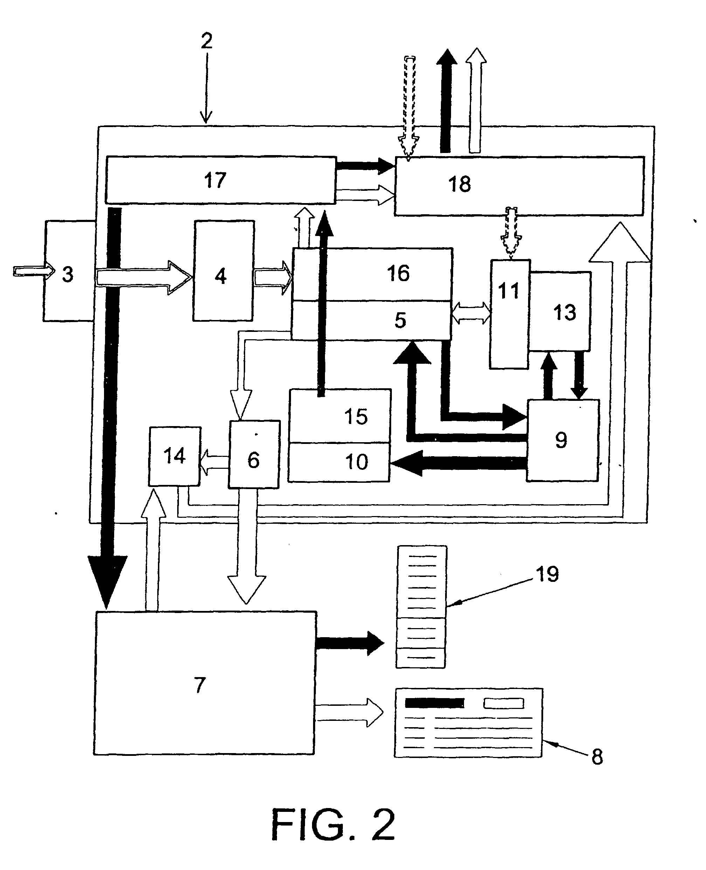

Figure 2 shows schematically the functioning of a main terminal 2 which includes a local data input unit 3 for entering codes for articles making up a shopping basket of the customer, codes of customers doing the shopping, and codes for coupons 8 that are presented for redemption. The terminal 2 is connected to a printer unit 7, intended to print coupons 8 and purchase receipts 19.

The main terminal also comprises
* a register unit, 4
* detecting means 16 for the end of the purchase
* a verification unit, 5 an assignment file, 11
* a unified file of coupons, 13
* generation means 6 for a promotional coupon
* a register of issued and printed coupons, 14
* a record unit 17 that stores data on the list of purchases made by each customer and conditions of each coupon issued
* a data input and output unit, 18
* processing means for redemption,9
* register means 10 for generating the redeemed coupons file
* a register for redeemed coupons, 15

In figure 2, the white arrows show the operations being carried out in terminal 2 with respect to the generation of a coupon 8 while the black arrows show the operations that are carried out when processing the redemption of a coupon. In turn, the white arrows with a double line represent the input of data into terminal 2. When the white arrows comprise double broken lines, this denotes the loading of non-local data.

In order to generate a coupon 8, the following operations are performed:

The register unit 4 registers the codes of the articles received from the local data input unit and the code of the customer making the purchase, and it creates a list of purchases in which each entry corresponds to an article acquired by the customer. Once the detector means for the end of the purchase 16 have detected the end of the purchase (for example, when the corresponding command is keyed with the keypad of the local data input unit 3), the customer code is passed to the verification means 5 which in turn verify whether the customer code in question corresponds to a customer code contained in the assignment file 11 in which the customer codes associated with coupon codes identifying standard coupons are to be found. The detecting means 16 also communicate the data in the list of purchases of the customer to the archive unit 17 which stores that data together with the customer identification.

When the verification means 5 detect that the customer code is included in the assignment file, they recover the conditions of the coupon from the unified file of coupons 13 and order the generation means for the promotional coupon 6 to generate a virtual coupon in a pre-established format and containing the customer identification, as for example the name, the customer code, the gift conditions both written and in code form, and a customer code made up of digits of the customer code associated with the standard coupon code, control digits, identifier digits of the store issuing the coupon, etc. The digit for the coupon is generated both in alphanumeric characters and in the form of bar code.

The generation means 6 then generate the standard coupon and order the printer unit 7 to print the coupon 8 in the form of a certificate which is handed over to the customer.

The generation means 6 in turn inform the register of emitted coupons 14 that they have ordered the printing of the coupon 8 identified by the customer code and the standard coupon code. When the coupon 8 has been printed, the printer unit 7 confirms the printing to the register of coupons 14 where the data on the coupon that has been handed over is then kept registered.

For the redemption of a coupon 8, the terminal 2 performs the following operations.

Via the local data input unit 3, the register unit 4, the detector means for the end of the purchase 16 and the verification means 5 determining whether the security digits in the code of the coupon 8 presented for redemption, coincide with digits in the code of the identified customer, the coupon code, the customer code and the list of purchases of the customer, get at the redemption processing means 9.

The redemption processing means 9, after consulting with the unified file of coupons 13 which are the conditions established by the coupon code and check whether the list of purchases of the customer who has presented the coupon 8 for redemption actually satisfies said conditions, then transmit the redemption order to the register means 10 which then create a register 15 of the coupon that has to be redeemed and which they transmit to the archive unit 17 and the data on the list of purchases. The archive unit 17 stores the data on the redeemed coupon along with the data on the list of purchases by the customer and, on the other hand, it orders the printer unit to issue the bill corresponding to the list of purchases made by the customer to which, the gift corresponding to the conditions established in the redeemed coupon, has been assigned.

The data input and output unit 18 has the following functions.

On one hand, as far as the input of data is concerned, the unit 18 serves to load the assignment file 11 in the main terminal 2. According to that denoted by the double broken line arrows that can be seen in figure 2, the remotely generated assignment file 11 is loaded from an external source, for example directly via a telephone line or by means of introducing a diskette, via the unit 18, this loading being done not continuously but instead periodically such as once a day, one a week, etc.

On the other hand, the unit 18 also has the function of recovering, on request from outside, the data contained in the archive unit 17 and the register of issued coupons 14 when said data needs to be incorporated into the central processing means 1. In the same way, the modifications in the unified file of coupons 13 can be made via the unit 18.

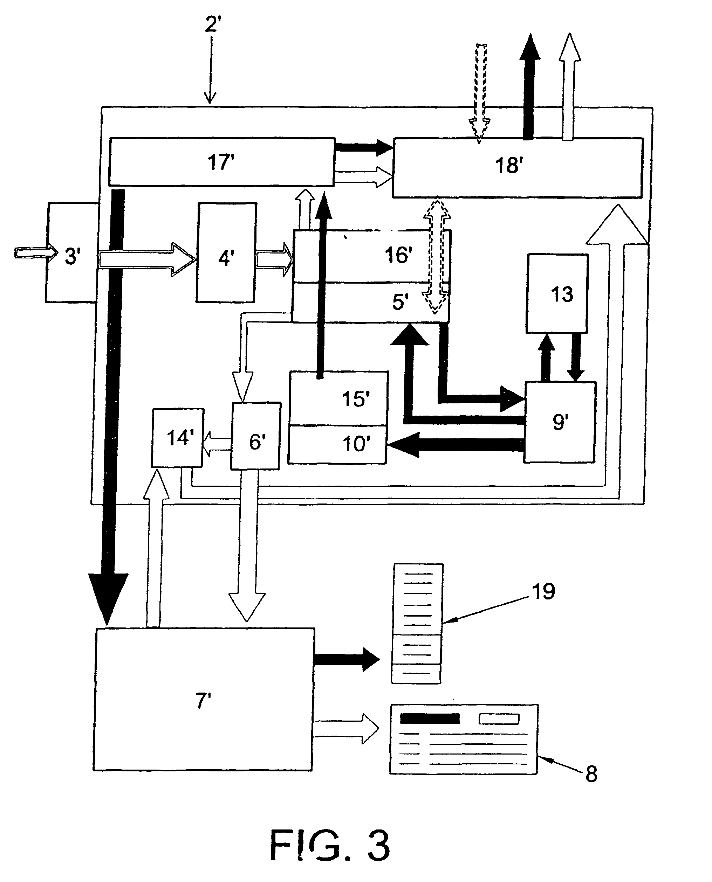

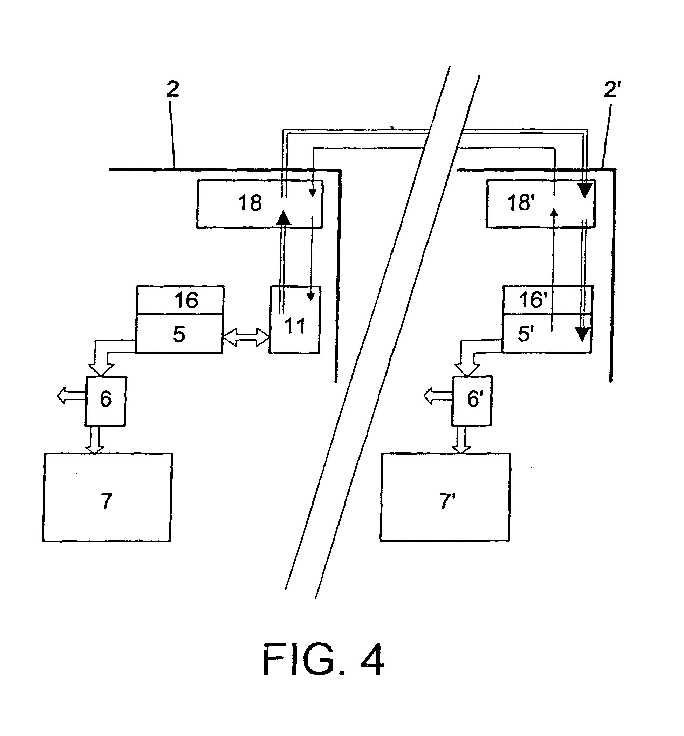

Figure 3 shows a secondary terminal 2' which is differentiated from the main terminal shown in figure 2 primarily by the fact that it does not contain the assignment file 11. Therefore, the elements displayed and their functioning are equivalent to what has been described with respect to figure 2, with the exception that when it comes to processing the possible issuing of a promotion coupon the verification means 5' consult, via the data input and output unit 18', an assignment file 11 located in a main terminal 2 as shown in figure 2, via an interconnection as shown in figure 4.

Figure 4 shows the interconnection and flows of data among elements of a main terminal 2 and a secondary terminal 2'. In this figure it can be seen that the verification means 5' consult (see single arrows) and receive (see double arrows) data from the assignment file 11 in the main terminal 2 via an input and output unit 18' and the input and output unit 18.

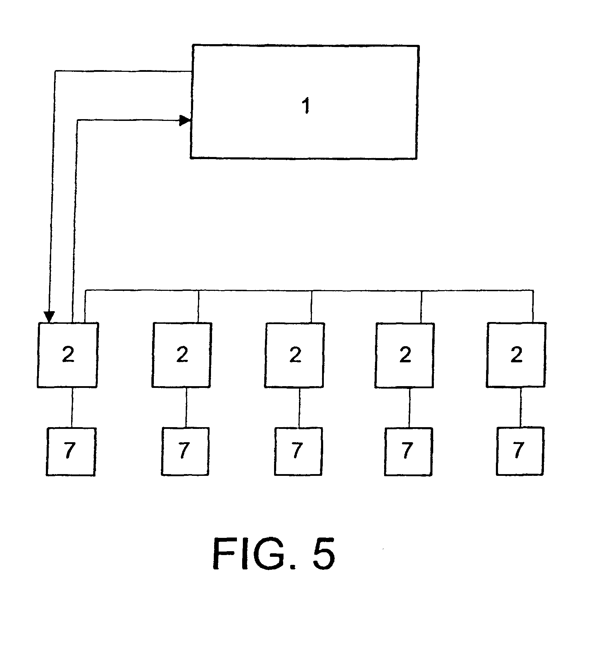

Figure 5 shows schematically the interrelation of the central data processing means 1 with a plurality of interconnected main terminals 2. In the design shown in figure 1, each of the terminals 2 is connected to a printer 7,7' although it is also possible to have several terminals 2 so that they share a printer. The printers 7,7' can be intended for printing just the coupons that are handed to the customers or they can also be used for printing the purchase receipt. The terminals 2 can be programmable electronic cash registers, conventional themselves.

The arrows appearing in figure 1 indicate the exchange of data between the central data processing means and one of the main terminals 2, which is in turn connected to the other terminals 2 in order to allow an exchange of data among the terminals 2.

## Claims

1. A device for the generation, local printing and redemption of promotional coupons (8) comprising a terminal (2,2') provided in at least one point of sale, this terminal (2,2') comprising
a local data input unit (3,3') in order to enter the codes of articles which make up the shopping of a customer, the code of the customer doing the shopping, and the codes of coupons (8) that are presented for redemption,
a printer unit (7,7');
a registering unit (4,4') which registers the codes of the articles received from the local data input unit (3,3') and the customer code, and creates a list of purchases in which each entry corresponds to an article acquired by a customer whose code has been introduced via the local data input unit (3,3');
verification means (5,5') which verify whether at least one criterion selected from among customer data corresponds to at least one parameter for the issuing of at least one coupon (8),
detecting means (16,16') for detecting the end of the list of purchases of the customer,
generation means (6,6') for a coupon (8),
redemption processing means (9,9') for each coupon (8) handed over by a customer for redemption,
**characterised in that**
the generation means (6,6') are connected to an assignment file (11), generated by central data processing means (1) on the basis of a master file of customers (12) which contains data on each customer that holds a shopping card, and on the basis of a unified file of coupons (13) containing a plurality of standard coupons (19,19'), each one identified by means of a specific standard coupon code, each one corresponding to specific conditions that must be met in order to redeem a coupon (8) generated by the generation means (6,6',7,7');
said assignment file (11) contains customer codes, each one associated with at least one standard coupon code (19,19');
when the verification means (5,5') have checked that a customer code introduced via the local data input unit (3,3') coincides with a customer code included in the assignment file (11), the generation means (6,6') are arranged to generate a virtual coupon and automatically order the printer unit (7,7') to print a coupon (8) with a coupon code that comprises a security code composed of digits from the customer code, and with the standard coupon code assigned to the customer in the assignment file (11);
the processing means (9,9') are arranged to only execute the redemption of a coupon (8) presented by a customer on a subsequent purchase, after having checked that the digits of the customer code and the data of the list of said purchase established by the register unit respectively coincide with the corresponding digits in the security code and with the specific conditions corresponding to the standard coupon code, which appear in the coupon code of the coupon (8) handed over.

2. A device according to claim 1, **characterised in that** the terminal (2,2') is a main terminal (2) that maintains the assignment file (11).

3. A device according to claim 1, **characterised in that** the terminal (2,2') is a secondary terminal (2') that receives the assignment file (11) from a remote location.

4. A device according to claim 1, **characterised in that** the generation means (6,6') are arranged to generate the coupon code in the form of bar code.

5. A device according to claim 1, **characterised in that** the security code comprises digits that only partially coincide with digits corresponding to the customer identification code.

6. A device according to claim 5, **characterised in that** the security code coincides with at least three digits of the customer identification code.

7. A device according to claim 6, **characterised in that** the security code coincides with the last three digits of the customer identification code.

8. A device according to claim 1, **characterised in that** the generation means (6) comprise a register (14,14') of issued and printed coupons, this register being generated by an archive file (17,17').

9. A device according to claim 1, **characterised in that** the processing means (9,9') comprise register means (10,10') that generate a file of redeemed coupons (15,15').

10. A device according to claim 9, **characterised in that** the registering means are arranged to maintain the file of redeemed coupons (15,15') only until the file of redeemed coupons (15,15') is transferred to the central data processing means (1).

11. A device according to claim 12, **characterised in that** the central data processing means (1) are arranged to keep active the data on each redeemed coupon (8) in the file of redeemed coupons (15,15') only until the validity of each coupon (8) expires.

12. A device according to claim 8, **characterised in that** the archive unit (17,17') is arranged to maintain the issued coupons register (14) only until the register is transferred to the central data processing means (1).

13. A device according to claim 12, **characterised in that** the central data processing means (1) are arranged to keep active the data on a coupon (8) originating from the register of issued coupons (14,14') only until the validity of said coupon (8) expires.

14. A device according to claim 1, **characterised in that** the internal code of each standard coupon in the unified file (13) of coupons comprises at least six digits making up a different alphanumeric code for each standard coupon.

15. A system for the generation, local printing and redemption of promotional coupons (8) comprising
central data processing means (1);
at least one main terminal (2) provided in at least one point of sale, including a local data input unit (3) in order to enter the codes of articles making up the shopping basket of a customer, the code of the customer doing the shopping, and the codes of coupons (8) that are presented for redemption,
a printer unit (7,7');
a registering unit (4) which registers the codes of the articles received from the local data input unit (3), and creates a list of purchases in which each entry corresponds to an article bought by a customer whose code has been introduced via the local data input unit (3);
verification means (5) which verify whether at least one criterion selected from among customer data corresponds to at least one parameter for the issuing of at least one coupon (8),
detecting means (16) for detecting the end of the list of purchases of the customer,
generation means (6) of a coupon (8),
redemption processing means (9) for each coupon (8) handed over by a customer for redemption,
**characterised in that**
the central data processing means (1) are arranged to generate an assignment file (11) on the basis of a master file of customers (12) which contains data on each customer that holds a shopping card, and on the basis of a unified file of coupons (13) containing a plurality of standard coupons (19,19'), each one identified by means of a specific standard coupon code, and each one corresponding to specific conditions that must be met in order to redeem a coupon (8) generated by the generation means (6,6',7,7'); said assignment file (11) containing customer codes each associated with at least one standard coupon code (19,19');
the generation means (6,6') are arranged to receive the master file of customers with the associated coupon (11) and, when the verification means (5,5') have checked that a customer code introduced via the local data input unit (3,3') coincides with a customer code included in the assignment file (11), they generate a virtual coupon and automatically order the printer unit (7,7') to print a coupon (8) with a coupon code that includes a security code composed of digits from the customer code, and with the standard coupon code assigned to the customer in the assignment file (11);
the processing means (9,9') are arranged to only execute the redemption of a coupon (8) presented by a customer on a subsequent purchase, after checking that the digits of the customer code and the data on the list of said purchase established by the registering unit, respectively coincide with the corresponding digits in the security code and with the specific conditions corresponding to the standard coupon code, which appear in the coupon code of the coupon (8) handed over.

16. A system according to claim 15, **characterised in that** the terminal (2,2') is a main terminal (2) that maintains the assignment file (11) in its memory.

17. A system according to claim 15, **characterised in that** the terminal (2,2') is a dependent terminal (2') that receives the assignment file (11) from a remote location.

18. A system according to claim 15, **characterised in that** it includes at least one main terminal (2) which maintains the assignment file (11) that is connected to at least one dependent terminal (2') which does not maintain in its memory the master file of customers with associated coupons.

19. A system according to claim 15, **characterised in that** the generation means (6,6') are arranged to generate the coupon code in the form of bar code.

20. A system according to claim 15, **characterised in that** the security code comprises digits that only partially coincide with corresponding digits in the customer identification code.

21. A system according to claim 20, **characterised in that** the security code coincides with at least three digits in the customer identification code.

22. A system according to claim 21, **characterised in that** the security code coincides with the last three digits of the customer identification code.

23. A system according to claim 15, **characterised in that** the generation means (6) include a register (14,14') of issued and printed coupons, this register being generated by a record unit (17,17').

24. A system according to claim 15, **characterised in that** the processing means (9,9') comprise registering means (10,10') that generate a file of redeemed coupons (15,15').

25. A system according to claim 23, **characterised in that** the registering means are arranged to maintain the file of redeemed coupons (15,15') only until the file of redeemed coupons (15,15') is transferred to the central data processing means (1).

26. A system according to claim 25, **characterised in that** the central data processing means (1) are arranged to keep active the data on each redeemed coupon (8) in the file of redeemed coupons (15,15') only until the validity of each coupon (8) expires.

27. A system according to claim 23, **characterised in that** the record unit (17,17') is arranged to maintain the issued coupons register (14) only until the register is transferred to the central data processing means (1).

28. A system according to claim 27, **characterised in that** the central data processing means (1) are arranged to keep active the data on a coupon (8) originating from the register of issued coupons (14,14') only until the validity of each coupon (8) expires.

29. A system according to claim 15, **characterised in that** the internal code of each standard coupon in the unified file (13) of coupons comprises at least six digits making up a different alphanumeric code for each standard coupon.

30. Use of the system defined in any of claims 15 to 29 for the generation, local printing and redemption of promotional coupons (8).

## Patentansprüche

1. Vorrichtung zum Erzeugen, lokalen Drucken und Einlösen von Werbecoupons (8), die ein Endgerät (2, 2') umfasst, das an wenigstens einem Verkaufspunkt vorhanden ist, wobei dieses Endgerät (2, 2') umfasst:
eine lokale Dateneingabeeinheit (3, 3') zum Eingeben der Codes von Artikeln, aus denen der Einkauf eines Kunden besteht, des Codes des Kunden, der den Einkauf tätigt, und der Codes von Coupons (8), die zum Einlösen vorgelegt werden,
eine Druckereinheit (7, 7');
eine Registriereinheit (4, 4'), die die von der lokalen Dateneingabeeinheit (3, 3') empfangenen Codes der Artikel und den Kunden-Code registriert und eine Liste von Käufen herstellt, in der jeder Eintrag einem von einem Kunden, dessen Code über die lokale Dateneingabeeinheit (3, 3') eingegeben worden ist, erworbenen Artikel entspricht;
eine Prüfeinrichtung (5, 5'), die prüft, ob wenigstens ein Kriterium, das aus Kundendaten ausgewählt wird, wenigstens einem Parameter für die Ausgabe wenigstens eines Coupons (8) entspricht,
eine Erfassungseinrichtung (16, 16'), die das Ende der Liste der Käufe des Kunden erfasst,
eine Erzeugungseinrichtung (6, 6') für einen Coupon (8),
eine Einlöse-Verarbeitungseinrichtung (9, 9') für jeden Coupon (8), der von einem Kunden zum Einlösen übergeben wird,
**dadurch gekennzeichnet, dass**
die Erzeugungseinrichtung (6, 6') mit einer Zuordnungsdatei (11) verbunden ist, die von einer zentralen Datenverarbeitungseinrichtung (1) auf Grundlage einer Stammdatei von Kunden (12), die Daten über jeden Kunden enthält, der Inhaber einer Kundenkarte ist, und auf Grundlage einer vereinheitlichten Datei von Coupons (13) erzeugt wird, die eine Vielzahl von Standardcoupons (19, 19') enthält, die jeder anhand eines speziellen Standardcoupon-Codes identifiziert werden und jeweils speziellen Bedingungen entsprechen, die erfüllt sein müssen, um einen von der Erzeugungseinrichtung (6, 6', 7, 7') erzeugten Coupon (8) einzulösen;
die Zuordnungsdatei (11) Kunden-Codes enthält, die jeweils zu wenigstens einem Standardcoupon-Code (19, 19') gehören;
wenn die Prüfeinrichtungen (5, 5') festgestellt hat, dass ein über die lokale Dateneingabeeinheit (3, 3') eingegebener Kunden-Code mit einem in der Zuordnungsdatei (11) enthaltenen Kunden-Code übereinstimmt, die Erzeugungseinrichtung (6, 6') einen virtuellen Coupon erzeugt und die Druckereinheit (7, 7') automatisch anweist, einen Coupon (8) mit einem Coupon-Code, der einen Sicherheits-Code umfasst, der aus Ziffern aus dem Kunden-Code besteht, und mit dem Standardcoupon-Code, der dem Kunden in der Zuordnungsdatei (11) zugeordnet ist, zu drucken;
die Verarbeitungseinrichtung (9, 9') die Einlösung eines Coupons (8), der von einem Kunden bei einem folgenden Kauf vorgelegt wird, erst ausführt, nachdem sie festgestellt hat, dass die Ziffern des Kunden-Codes und die Daten der Liste des Kaufs, die von der Registriereinheit eingerichtet worden ist, mit den entsprechenden Ziffern in dem Sicherheits-Code bzw. den speziellen Bedingungen übereinstimmen, die dem Standardcoupon-Code entsprechen und die auf dem übergebenen Coupon (8) erscheinen.

2. Vorrichtung nach Anspruch 1, **dadurch gekennzeichnet, dass** das Endgerät (2, 2') ein Haupt-Endgerät (2) ist, das die Zuordnungsdatei (11) führt.

3. Vorrichtung nach Anspruch 1, **dadurch gekennzeichnet, dass** das Endgerät (2, 2') ein Neben-Endgerät (2') ist, das die Zuordnungsdatei (11) von einem entfernten Standort empfängt.

4. Vorrichtung nach Anspruch 1, **dadurch gekennzeichnet, dass** die Erzeugungseinrichtung (6, 6') den Coupon-Code in Form eines Strich-Codes erzeugt.

5. Vorrichtung nach Anspruch 1, **dadurch gekennzeichnet, dass** der Sicherheits-Code Ziffern umfasst, die nur teilweise mit Ziffern übereinstimmen, die dem Kundenidentifizierungs-Code entsprechen.

6. Vorrichtung nach Anspruch 5, **dadurch gekennzeichnet, dass** der Sicherheits-Code mit wenigstens drei Ziffern des Kundenidentifizierungs-Codes übereinstimmt.

7. Vorrichtung nach Anspruch 6, **dadurch gekennzeichnet, dass** der Sicherheits-Code mit den letzten drei Ziffern des Kundenidentifizierungs-Codes übereinstimmt.

8. Vorrichtung nach Anspruch 1, **dadurch gekennzeichnet, dass** die Erzeugungseinrichtung (6) ein Register (14, 14') ausgegebener und gedruckter Coupons enthält, wobei dieses Register von einer Archivdatei (17, 17') erzeugt wird.

9. Vorrichtung nach Anspruch 1, **dadurch gekennzeichnet, dass** die Verarbeitungseinrichtung (9, 9') eine Registereinrichtung (10, 10') umfasst, die eine Datei eingelöster Coupons (15, 15') erzeugt.

10. Vorrichtung nach Anspruch 9, **dadurch gekennzeichnet, dass** die Registereinrichtung die Datei eingelöster Coupons (15, 15') nur so lange führt, bis die Datei eingelöster Coupons (15, 15') zu der zentralen Datenverarbeitungseinrichtung (1) übertragen ist.

11. Vorrichtung nach Anspruch 12, **dadurch gekennzeichnet, dass** die zentrale Datenverarbeitungseinheit (11) die Daten über jeden eingelösten Coupon (8) in der Datei eingelöster Coupons (15, 15') nur so lange aktiv hält, bis die Gültigkeit jedes Coupons (8) abläuft.

12. Vorrichtung nach Anspruch 8, **dadurch gekennzeichnet, dass** die Archiveinheit (17, 17') das Register (14) ausgegebener Coupons nur so lange führt, bis das Register zu der zentralen Datenverarbeitungseinrichtung (1) übertragen ist.

13. Vorrichtung nach Anspruch 12, **dadurch gekennzeichnet, dass** die zentrale Datenverarbeitungseinrichtung (1) die Daten über einen Coupon (8), die aus dem Register ausgegebener Coupons (14, 14') stammen, nur so lange aktiv hält, bis die Gültigkeit des Coupons (8) abläuft.

14. Vorrichtung nach Anspruch 1, **dadurch gekennzeichnet, dass** der interne Code jedes Standardcoupons in der vereinheitlichten Datei (13) von Coupons wenigstens sechs Ziffern umfasst, die einen unterschiedlichen alphanumerischen Code für jeden Standardcoupon bilden.

15. System zu Erzeugen, lokalen Drucken und Einlösen von Werbecoupons (8), das umfasst:
eine zentrale Datenverarbeitungseinrichtung (1);
wenigstens ein Haupt-Endgerät (2), das an wenigstens einem Verkaufspunkt vorhanden ist und eine lokale Dateneingabeeinheit (3) zum Eingeben der Codes von Artikeln, aus denen der Einkauf eines Kunden besteht, des Codes des Kunden, der den Einkauf tätigt, und der Codes von Coupons (8), die zum Einlösen vorgelegt werden, enthält,
eine Druckereinheit (7, 7');
eine Registriereinheit (4), die die von der lokalen Dateneingabeeinheit (3) empfangenen Codes der Artikel registriert und eine Liste von Käufen herstellt, in der jeder Eintrag einem von einem Kunden, dessen Code über die lokale Dateneingabeeinheit (3) eingegeben wurde, gekauften Artikel entspricht;
eine Prüfeinrichtung (5), die prüft, ob wenigstens ein Kriterium, das aus Kundendaten ausgewählt wird, wenigstens einem Parameter für die Ausgabe wenigstens eines Coupons (8) entspricht,
eine Erfassungseinrichtung (16), die das Ende der Liste der Käufe des Kundens erfasst,
eine Erzeugungseinrichtung (6) eines Coupons (8),
eine Einlöse-Verarbeitungseinrichtung (9) für jeden Coupon (8), der von einem Kunden zum Einlösen übergeben wird,
**dadurch gekennzeichnet, dass**
die zentrale Datenverarbeitungseinrichtung (1) eine Zuordnungsdatei (11) auf Grundlage einer Stammdatei von Kunden (12), die Daten über jeden Kunden enthält, der Inhaber einer Kundenkarte ist, und auf Grundlage einer vereinheitlichten Datei von Coupons (13) erzeugt, die eine Vielzahl von Standardcoupons (19, 19') enthält, die jeder anhand eines speziellen Standardcoupon-Codes identifiziert werden und jeweils speziellen Bedingungen entsprechen, die erfüllt sein müssen, um einen von der Erzeugungseinrichtung (6, 6', 7, 7') erzeugten Coupon (8) einzulösen, wobei die Zuordnungsdatei (11) Kunden-Codes enthält, die jeweils zu wenigstens einem Standardcoupon-Code (19, 19') gehören;
die Erzeugungseinrichtung (6, 6') die Stammdatei von Kunden mit dem dazugehörigen Coupon (11) empfängt, und, wenn die Prüfeinrichtung (5, 5') festgestellt hat, dass ein über die lokale Dateneingabeeinheit (3, 3') eingegebener Kunden-Code mit einem in der Zuordnungsdatei (11) enthaltenen Kunden-Code übereinstimmt, sie einen virtuellen Coupons erzeugt und die Druckereinheit (7, 7') automatisch anweist, einen Coupon (8) mit einem Coupon-Code, der einen Sicherheits-Code enthält, der aus Ziffern aus dem Kunden-Code besteht, und mit dem Standardcoupon-Code, der dem Kunden in der Zuordnungsdatei (11) zugeordnet ist, zu drucken;
die Verarbeitungseinrichtung (9, 9') die Einlösung eines Coupons (8), der von einem Kunden bei einem folgenden Kauf vorgelegt wird, erst ausführt, nachdem festgestellt worden ist, dass die Ziffern des Kunden-Codes und die Daten auf der Liste des Kaufs, die von der Registriereinheit eingerichtet worden ist, mit den entsprechenden Ziffern in dem Sicherheits-Code bzw. den speziellen Bedingungen übereinstimmen, die dem Standardcoupon-Code entsprechen und die in dem Coupon-Code des übergebenen Coupons (8) erscheinen.

16. System nach Anspruch 15, **dadurch gekennzeichnet, dass** das Endgerät (2, 2') ein Haupt-Endgerät (2) ist, das die Zuordnungsdatei (11) in seinem Speicher führt.

17. System nach Anspruch 15, **dadurch gekennzeichnet, dass** das Endgerät (2, 2') ein Unter-Endgerät (2') ist, das die Zuordnungsdatei (11) von einem entfernten Standort empfängt.

18. System nach Anspruch 15, **dadurch gekennzeichnet, dass** es wenigstens ein Haupt-Endgerät (2) enthält, das die Zuordnungsdatei (11) führt und mit wenigstens einem Unter-Endgerät (2') verbunden ist, das in seinem Speicher die Stammdatei von Kunden mit dazugehörigen Coupons nicht führt.

19. System nach Anspruch 15, **dadurch gekennzeichnet, dass** die Erzeugungseinrichtung (6, 6') den Coupon-Code in Form eines Strichcodes erzeugt.

20. System nach Anspruch 15, **dadurch gekennzeichnet, dass** der Sicherheits-Code Ziffern umfasst, die nur teilweise mit entsprechenden Ziffern in dem Kundenidentifizierungs-Code übereinstimmen.

21. System nach Anspruch 20, **dadurch gekennzeichnet, dass** der Sicherheits-Code mit wenigstens drei Ziffern in dem Kundenidentifizierungs-Code übereinstimmt.

22. System nach Anspruch 21, **dadurch gekennzeichnet, dass** der Sicherheits-Code mit den letzten drei Ziffern des Kundenidentifizierungs-Codes übereinstimmt.

23. System nach Anspruch 15, **dadurch gekennzeichnet, dass** die Erzeugungseinrichtung (6) ein Register (14, 14') ausgegebener und gedruckter Coupons enthält, wobei dieses Register von einer Aufzeichnungseinheit (17, 17') erzeugt wird.

24. System nach Anspruch 15, **dadurch gekennzeichnet, dass** die Verarbeitungseinrichtung (9, 9') eine Registriereinrichtung (10, 10') umfasst, die eine Datei eingelöster Coupons (15, 15') erzeugt.

25. System nach Anspruch 23, **dadurch gekennzeichnet, dass** die Registriereinrichtung die Datei eingelöster Coupons (15, 15') nur so lange führt, bis die Datei eingelöster Coupons (15, 15') zu der zentralen Datenverarbeitungseinrichtung (1) übertragen ist.

26. System nach Anspruch 25, **dadurch gekennzeichnet, dass** die zentrale Datenverarbeitungseinrichtung (1) die Daten über jeden eingelösten Coupon (8) in der Datei eingelöster Coupons (15, 15') nur so lange aktiv hält, bis die Gültigkeit jedes Coupon (8) abläuft.

27. System nach Anspruch 23, **dadurch gekennzeichnet, dass** die Erfassungseinheit (17, 17') das Register ausgegebener Coupons (14) nur so lange führt, bis das Register zu der zentralen Datenverarbeitungseinrichtung (1) übertragen ist.

28. System nach Anspruch 27, **dadurch gekennzeichnet, dass** die zentrale Datenverarbeitungseinrichtung (1) die Daten über einen Coupon (8), die aus dem Register ausgegebener Coupons (14, 14') stammen, nur so lange aktiv hält, bis die Gültigkeit jedes Coupons (8) abläuft.

29. System nach Anspruch 15, **dadurch gekennzeichnet, dass** der interne Code jedes Standardcoupons in der vereinheitlichten Datei (13) von Coupons wenigstens sechs Ziffern umfasst, die einen unterschiedlichen alphanumerischen Code für jeden Standardcoupon bilden.

30. Einsatz des Systems nach einem der Ansprüche 15 bis 29 zum Erzeugen, lokalen Drucken und Einlösen von Werbecoupons (8).

## Revendications

1. Dispositif de génération, d'impression locale et de remboursement de coupons promotionnels (8) comprenant un terminal (2, 2') prévu dans au moins un point de vente, ce terminal (2, 2') comprenant :
une unité locale de saisie de données (3, 3') afin d'entrer les codes d'articles qui constituent les achats d'un consommateur, le code du consommateur effectuant ses achats, et les codes des coupons (8) qui sont présentés pour un remboursement ;
une unité d'impression (7, 7') ;
une unité d'enregistrement (4, 4') qui enregistre les codes des articles reçus de l'unité locale de saisie de données (3, 3') et le code du consommateur, et crée une liste des achats dans laquelle chaque entrée correspond à un article acquis par un consommateur dont le code a été introduit au moyen de l'unité locale de saisie de données (3, 3') ;
un moyen de vérification (5, 5') qui vérifie si au moins un critère choisi parmi des données du consommateur correspond à au moins un paramètre pour l'émission d'au moins un coupon (8),
un moyen de détection (16, 16') afin de détecter la fin de la liste des achats du consommateur ;
un moyen de génération (6, 6') d'un coupon (8),
un moyen de traitement des remboursements (9, 9') pour chaque coupon (8) remis par un consommateur pour un remboursement ;
**caractérisé en ce que** :
le moyen de génération (6, 6') est relié à un fichier d'attribution (11), généré par un moyen central de traitement de données (1) sur la base d'un fichier principal de consommateurs (12) qui contient des données sur chaque consommateur possédant une carte d'achat, et sur la base d'un fichier unifié de coupons (13) contenant plusieurs coupons standards (19, 19'), chacun identifié au moyen d'un code spécifique de coupon standard, chacun correspondant à des conditions spécifiques qui sont à remplir afin de rembourser un coupon (8) généré par le moyen de génération (6, 6', 7, 7') ;
ledit fichier d'attribution (11) contient des codes de consommateur, chacun associé avec au moins un code de coupon standard (19, 19') ;
lorsque le moyen de vérification (5, 5') a vérifié qu'un code de consommateur introduit au moyen de l'unité locale de saisie de données (3, 3') coïncide avec un code de consommateur compris dans le fichier d'attribution (11), le moyen de génération (6, 6') est conçu pour générer un coupon virtuel et commander automatiquement l'unité d'impression (7, 7') afin d'imprimer un coupon (8) avec un code de coupon qui comprend un code de sécurité composé de chiffres du code du consommateur, et avec le code de coupon standard attribué au consommateur dans le fichier d'attribution (11) ;
le moyen de traitement (9, 9') n'est conçu que pour réaliser le remboursement d'un coupon (8) présenté par un consommateur pour un achat à venir, après avoir vérifié que les chiffres du code du consommateur ainsi que les données de la liste dudit achat établie par l'unité d'enregistrement coïncide respectivement avec les chiffres correspondant dans le code de sécurité ainsi qu'avec les conditions spécifiques correspondant au code de coupon standard, qui apparaissent dans le code de coupon du coupon (8) remis.

2. Dispositif selon la revendication 1, **caractérisé en ce que** le terminal (2, 2') est un terminal principal (2) qui conserve le fichier d'attribution (11).

3. Dispositif selon la revendication 1, **caractérisé en ce que** le terminal (2, 2') est un terminal secondaire (2') qui reçoit le fichier d'attribution (11) à partir d'un emplacement éloigné.

4. Dispositif selon la revendication 1, **caractérisé en ce que** le moyen de génération (6, 6') est conçu pour générer le code de coupon sous la forme d'un code-barre.

5. Dispositif selon la revendication 1, **caractérisé en ce que** le code de sécurité comprend des chiffres qui ne coïncident que partiellement avec des chiffres correspondant au code d'identification du consommateur.

6. Dispositif selon la revendication 5, **caractérisé en ce que** le code de sécurité coïncide avec au moins trois chiffres du code d'identification du consommateur.

7. Dispositif selon la revendication 6, **caractérisé en ce que** le code de sécurité coïncide avec les trois derniers chiffres du code d'identification du consommateur.

8. Dispositif selon la revendication 1, **caractérisé en ce que** le moyen de génération (6) comprend un registre (14, 14') des coupons émis et imprimés, ce registre étant généré par un fichier d'archives (17, 17').

9. Dispositif selon la revendication 1, **caractérisé en ce que** le moyen de traitement (9, 9') comprend un moyen d'enregistrement (10, 10') qui génère un fichier de coupons remboursés (15, 15').

10. Dispositif selon la revendication 9, **caractérisé en ce que** le moyen d'enregistrement est conçu pour ne conserver le fichier de coupons remboursés (15, 15') que jusqu'au transfert du fichier de coupons remboursés (15, 15') au moyen central de traitement de données (1).

11. Dispositif selon la revendication 12,
**caractérisé en ce que** le moyen central de traitement de données (1) est conçu pour ne conserver les données actives sur chaque coupon remboursé (8) dans le fichier de coupons remboursés (15, 15') que jusqu'à ce que la validité de chaque coupon (8) expire.

12. Dispositif selon la revendication 8, **caractérisé en ce que** l'unité d'archives (17, 17') est conçue pour ne conserver le registre de coupons émis (14) que jusqu'au transfert du registre au moyen central de traitement des données (1).

13. Dispositif selon la revendication 12,
**caractérisé en ce que** le moyen central de traitement de données (1) est conçu pour ne conserver les données actives sur un coupon (8) provenant du registre des coupons émis (14, 14') que jusqu'à ce que la validité dudit coupon (8) expire.

14. Dispositif selon la revendication 1, **caractérisé en ce que** le code interne de chaque coupon standard dans le fichier unifié (13) des coupons comprend au moins six chiffres constituant un code alphanumérique différent pour chaque coupon standard.

15. Système pour la génération, l'impression locale et le remboursement de coupons promotionnels (8) comprenant :
un moyen central de traitement de données (1) ;
au moins un terminal principal (2) prévu dans au moins un point de vente, comprenant une unité locale de saisie de données (3) afin d'entrer les codes des articles constituant le panier d'achat d'un consommateur, le code du consommateur effectuant ses achats, ainsi que les codes des coupons (8) qui sont présentés pour un remboursement,
une unité d'impression (7, 7') ;
une unité d'enregistrement (4) qui enregistre les codes des articles reçus de l'unité locale de saisie de données (3), et qui crée une liste des achats dans laquelle chaque entrée correspond à un article acheté par un consommateur dont le code a été introduit au moyen de l'unité locale de saisie de données (3) ;
un moyen de vérification (5) qui vérifie si au moins un critère choisi parmi les données du consommateur correspond à au moins un paramètre pour l'émission d'au moins un coupon (8),
un moyen de détection (16) afin de détecter la fin de la liste des achats du consommateur,
un moyen de génération (6) d'un coupon (8),
un moyen de traitement des remboursements (9) pour chaque coupon (8) remis par un consommateur pour un remboursement,
**caractérisé en ce que** :
le moyen central de traitement de données (1) est conçu pour générer un fichier d'attribution (11) sur la base d'un fichier principal de consommateurs (12) qui contient des données sur chaque consommateur possédant une carte d'achat, et sur la base d'un fichier unifié de coupons (13) contenant plusieurs coupons standards (19, 19'), chacun identifié au moyen d'un code spécifique de coupon standard, et chacun correspondant à des conditions spécifiques qui sont à remplir afin de rembourser un coupon (8) généré par le moyen de génération (6, 6', 7, 7') ; ledit fichier d'attribution (11) contenant des codes de consommateur, chacun associé avec au moins un code de coupon standard (19, 19') ;
un moyen de génération (6, 6') conçu pour recevoir le fichier principal des consommateurs avec le coupon associé (11) et, lorsque le moyen de vérification (5, 5') a vérifié que le code du consommateur introduit au moyen de l'unité locale de saisie de données (3, 3') coïncide avec un code du consommateur compris dans le fichier d'attribution (11), il génère un coupon virtuel et commande automatiquement l'unité d'impression (7, 7') afin d'imprimer un coupon (8) avec un code de coupon qui comprend un code de sécurité composé de chiffres du code du consommateur, et avec le code de coupon standard attribué au consommateur dans le fichier d'attribution (11) ;
le moyen de traitement (9, 9') n'est conçu que pour réaliser le remboursement d'un coupon (8) présenté par un consommateur pour un achat à venir, après avoir vérifié que les chiffres du code du consommateur ainsi que les données sur la liste dudit achat établie par l'unité d'enregistrement coïncide respectivement avec des chiffres correspondants dans le code de sécurité et avec les conditions spécifiques correspondant au code de coupon standard qui apparaissent dans le code de coupon du coupon (8) remis.

16. Système selon la revendication 15, **caractérisé en ce que** le terminal (2, 2') est un terminal principal (2) qui conserve le fichier d'attribution (11) dans sa mémoire.

17. Système selon la revendication 15, **caractérisé en ce que** le terminal (2, 2') est un terminal dépendant (2') qui reçoit le fichier d'attribution (11) à partir d'un emplacement éloigné.

18. Système selon la revendication 15, **caractérisé en ce qu'**il comprend au moins un terminal principal (2) qui conserve le fichier d'attribution (11) qui est relié à au moins un terminal dépendant (2') qui ne conserve pas dans sa mémoire le fichier principal des consommateurs avec les coupons associés.

19. Système selon la revendication 15, **caractérisé en ce que** le moyen de génération (6, 6') est conçu pour générer le code de coupon sous la forme d'un code-barre.

20. Système selon la revendication 15, **caractérisé en ce que** le code de sécurité comprend des chiffres qui ne coïncident que partiellement avec des chiffres correspondants dans le code d'identification du consommateur.

21. Système selon la revendication 20, **caractérisé en ce que** le code de sécurité coïncide avec au moins trois chiffres dans le code d'identification du consommateur.

22. Système selon la revendication 21, **caractérisé en ce que** le code de sécurité coïncide avec les trois derniers chiffres du code d'identification du consommateur.

23. Système selon la revendication 15, **caractérisé en ce que** le moyen de génération (6) comprend un registre (14, 14') de coupons émis et imprimés, ce registre étant généré par une unité d'enregistrement (17, 17').

24. Système selon la revendication 15, **caractérisé en ce que** le moyen de traitement (9, 9') comprend un moyen d'enregistrement (10, 10') qui génère un fichier de coupons remboursés (15, 15').

25. Système selon la revendication 23, **caractérisé en ce que** le moyen d'enregistrement est conçu pour ne conserver le fichier de coupons remboursés (15, 15') que jusqu'au transfert du fichier de coupons remboursés (15, 15') au moyen central de traitement de données (1).

26. Système selon la revendication 25, **caractérisé en ce que** le moyen central de traitement de données (1) est conçu pour ne conserver les données actives sur chaque coupon remboursé (8) dans le fichier de coupons remboursés (15, 15') que jusqu'à ce que la validité de chaque coupon (8) expire.

27. Système selon la revendication 23, **caractérisé en ce que** l'unité d'enregistrement (17, 17') est conçue pour ne conserver le registre des coupons émis (14) que jusqu'au transfert du registre au moyen central de traitement de données (1).

28. Système selon la revendication 27, **caractérisé en ce que** le moyen central de traitement de données (1) est conçu pour ne conserver les données actives sur un coupon (8) provenant du registre des coupons émis (14, 14') que jusqu'à ce que la validité de chaque coupon (8) expire.

29. Système selon la revendication 15, **caractérisé en ce que** le code interne de chaque coupon standard dans le fichier unifié (13) des coupons comprend au moins six chiffres constituant un code alphanumérique différent pour chaque coupon standard.

30. Utilisation du système défini dans l'une quelconque des revendications 15 à 29, pour la génération, l'impression locale et le remboursement de coupons promotionnels (8).
